# EUROPEAN PATENT APPLICATION

(11) **EP 4 765 340 A1**
(43) Date of publication of application: **24.06.2026**
(21) Application number: 25742259.2
(22) Date of filing: 17.01.2025
(51) Int. Cl.: H01M 10/6553, H01M 10/657, H01M 10/613, H01M 10/615, H01M 10/647

(54) **ELECTRODE ASSEMBLY, SECONDARY BATTERY, AND BATTERY UNIT**

(30) Priority: 18.01.2024 KR 20240008169; 10.01.2025 KR 20250004357
(71) Applicant: LG Energy Solution, Ltd., Seoul 07335 (KR)
(72) Inventor: WON, Sang Yeon, Daejeon 34122 (KR)
(74) Representative: Plasseraud IP
(86) International application number: PCT/KR2025/000981
(87) International publication number: WO 2025/155120

(57) **Abstract**

The present disclosure relates to an electrode assembly, a secondary battery, and a battery unit, and more specifically, to an electrode assembly, a secondary battery, and a battery unit capable of efficient heat exchange. An electrode assembly according to an embodiment of the present disclosure may include a plurality of electrodes, a separator interposed between the plurality of electrodes, and a plurality of protrusions protruding to one side from the plurality of electrodes, wherein the plurality of protrusions may be at least partially non-overlapping with each other in a thickness direction of the plurality of electrodes, wherein a protrusion of the plurality of protrusions may include a first part extending along a longitudinal direction of the plurality of electrodes, and a second part connecting an electrode of the plurality of electrodes and the first part, and the width of the second part may be formed narrower than the width of the first part.

## Description

### TECHNICAL FIELD

### CROSS-REFERENCE TO RELATED APPLICATIONS

The present application claims priority to Korean Patent Application No. 10-2024-0008169 filed on January 18, 2024 and Korean Patent Application No. 10-2025-0004357 filed on January 10, 2025 in the Republic of Korea, the disclosures of which are incorporated herein by reference.

### TECHNICAL FIELD

The present disclosure relates to an electrode assembly, a secondary battery, and a battery unit, and more specifically, to an electrode assembly, a secondary battery, and a battery unit capable of efficient heat exchange.

### BACKGROUND ART

A secondary battery (rechargeable battery) is a battery that can be charged and discharged, unlike a primary battery that cannot be recharged. A low-capacity secondary battery is used in small portable electronic devices such as mobile phones, laptop computers and camcorders, while a high-capacity battery is widely used as a power source for driving motors in hybrid vehicles or the like.

The secondary battery may be used in the form of a battery cell, and the battery cell may be composed of an electrode assembly in which a positive electrode, a separator, and a negative electrode are sequentially stacked within an exterior material, an exterior material accommodating the electrode assembly, and an electrolyte filled in an internal space of the exterior material. For the efficient operation of the battery cell, it is necessary to optimize the temperature of the positive electrode and the negative electrode constituting the electrode assembly. Roughly speaking, when the temperature of the positive electrode and the negative electrode is around 25°C, the efficiency of the battery cell may increase, and the life of the battery cell may also increase.

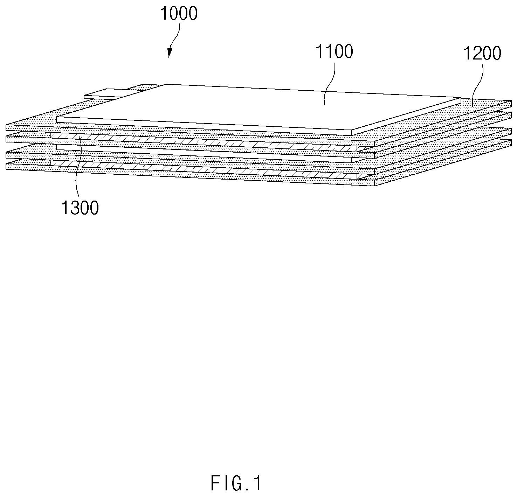

FIG. 1 is a perspective view showing an example of a conventional electrode assembly. The electrode assembly 1000 of FIG. 1 has a structure in which a plurality of positive electrodes 1100 and negative electrodes 1300 are stacked with a separator 1200 interposed therebetween, and this electrode assembly 1000 may be accommodated in an exterior material (not shown) to form a battery cell.

Conventionally, in order to regulate the temperature of a battery cell having such a structure, a method of bringing a cooling plate or a heating plate into contact with an upper surface or a lower surface of the battery cell is used. In this case, the cooling plate or the heating plate is positioned adjacent to the uppermost layer or the lowermost layer of the electrode assembly 1000, and thus there is a problem that the temperature of the electrode assembly 1000 is not effectively regulated as the thickness of the electrode assembly 1000 increases.

### SUMMARY

### TECHNICAL PROBLEM

The present disclosure is designed to solve the problems of the related art, and therefore the present disclosure is directed to providing an electrode assembly capable of effectively regulating temperature, a secondary battery including such an electrode assembly, and a battery unit including such a secondary battery.

### TECHNICAL SOLUTION

An electrode assembly according to an embodiment of the present disclosure may include a plurality of electrodes; a separator interposed between the plurality of electrodes; and a plurality of protrusions protruding to one side from the plurality of electrodes, wherein the plurality of protrusions may be at least partially non-overlapping with each other in a thickness direction of the plurality of electrodes, wherein a protrusion may include a first part extending along the longitudinal direction of the electrode; and a second part connecting an electrode and the first part, and the width of the second part may be formed narrower than the width of the first part.

The plurality of protrusions may be arranged along the longitudinal direction of the plurality of electrodes.

The protrusion may include an electrode uncoated portion protruding from one side of the electrode in a plate shape.

The electrode may include an electrode tab protruding in a different direction from the protrusion.

The protrusions may include a negative electrode protrusion formed on each of the plurality of negative electrodes.

The protrusions may further include a positive electrode protrusion formed on each of the plurality of positive electrodes, and the negative electrode protrusion and the positive electrode protrusion may be disposed alternately in the longitudinal direction of the plurality of electrodes.

The negative electrode protrusion may be spaced apart from the positive electrode protrusion in the longitudinal direction of the plurality of electrodes.

Meanwhile, an electrode assembly according to an embodiment of the present disclosure may include a plurality of positive electrodes; a plurality of negative electrodes; a separator interposed between the plurality of positive electrodes and negative electrodes; a plurality of positive electrode protrusions protruding from one side from the plurality of positive electrodes and a plurality of negative electrode protrusions protruding from the other side from the plurality of negative electrodes, wherein the plurality of positive electrode protrusions may be at least partially non-overlapping with each other in a thickness direction of the plurality of positive electrodes, and the plurality of negative electrode protrusions may be at least partially non-overlapping with each other in a thickness direction of the plurality of negative electrodes, wherein protrusion may include a first part extending along a longitudinal direction of the electrodes; and a second part connecting electrode and the first part, and a width of the second part may be formed narrower than a width of the first part.

The plurality of positive electrode protrusions may be arranged along the longitudinal direction of the plurality of positive electrodes, and the plurality of negative electrode protrusions may be arranged along the longitudinal direction of the plurality of negative electrodes.

A secondary battery according to an embodiment of the present disclosure may include an electrode assembly; and an exterior material accommodating the electrode assembly.

A battery unit according to an embodiment of the present disclosure may include a secondary battery; and a heat exchange unit that exchanges heat with the protrusions.

The heat exchange unit may include at least one of a heating portion for heating the protrusions; and a cooling portion for cooling the protrusions.

The heat exchange unit may further include a clamping member for clamping the plurality of protrusions accommodated inside the exterior material.

The heating portion may include a wire provided inside the clamping member.

The cooling portion may include a cooling flow path made of an insulating material.

The cooling flow path may be provided between the exterior material and the clamping member or inside the clamping member.

### ADVANTAGEOUS EFFECTS

An electrode assembly according to an embodiment of the present disclosure may include a plurality of protrusions protruding to one side from the plurality of electrodes, wherein each of the protrusions may include a first part extending along the longitudinal direction of the electrode, and a second part that connects the electrode and the first part and has a relatively narrower width. In this case, the electrode assembly may effectively exchange heat with an external heat exchange unit, so that there is an advantageous effect of effectively regulating temperature.

### BRIEF DESCRIPTION OF THE DRAWINGS

FIG. 1 is a perspective view showing an example of a conventional electrode assembly.
FIG. 2 is a perspective view showing a first embodiment of an electrode assembly according to the present disclosure.
FIG. 3 is a front view showing a specific shape of a protrusion in the electrode assembly of FIG. 2 of the present disclosure.
FIG. 4 is a perspective view showing a second embodiment of an electrode assembly according to the present disclosure.
FIG. 5 is a perspective view showing a third embodiment of an electrode assembly according to the present disclosure.
FIG. 6 is a perspective view showing a fourth embodiment of an electrode assembly according to the present disclosure.
FIG. 7 is a perspective view showing an embodiment of a secondary battery according to the present disclosure.
FIG. 8 is a perspective view showing an embodiment of a battery unit according to the present disclosure.
FIG. 9 is a cross-sectional view of the heat exchange unit shown in FIG. 8.
FIG. 10 is a cross-sectional view showing a modified example of the heat exchange unit of FIG. 9.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, an electrode assembly, a secondary battery, and a battery unit according to the present disclosure will be described with reference to the drawings.

### Electrode assembly

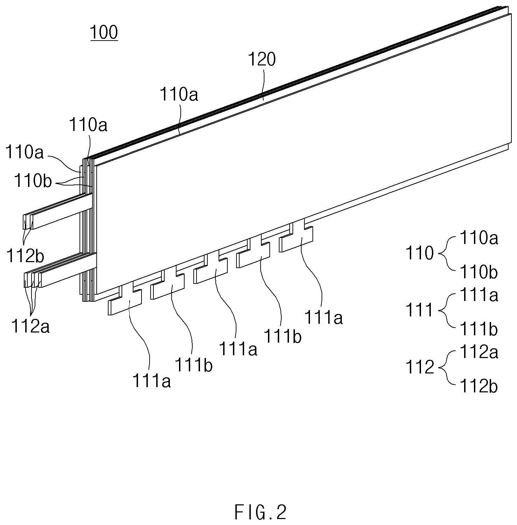

FIG. 2 is a perspective view showing a first embodiment of an electrode assembly according to the present disclosure.

The electrode assembly 100 shown in FIG. 2 includes three negative electrodes 110a and two positive electrodes 110b, but this is exemplary, and the number of negative electrodes 110a and positive electrodes 110b included in the electrode assembly 100 according to the first embodiment of the present disclosure is not limited thereto.

Referring to FIG. 2, the electrode assembly 100 according to the first embodiment of the present disclosure may include a plurality of electrodes 110, a separator 120 interposed between the plurality of electrodes 110, and a plurality of protrusions 111 protruding to one side from the plurality of electrodes 110. Here, the plurality of protrusions 111 may be at least partially non-overlapping with each other in the thickness direction of the plurality of electrodes 110. Specifically, the plurality of protrusions 111 may be arranged in the longitudinal direction of the electrode assembly 100 in a state where all or part thereof are not overlapping in the thickness direction of the electrode assembly 100.

A plurality of protrusions 111 are formed on one side of the electrode assembly 100 according to the first embodiment of the present disclosure, and the plurality of protrusions 111 may be coupled to a heat transfer unit 300 to be described later to exchange heat therewith. In this case, there is an advantageous effect of effectively controlling the temperature of the electrode assembly 100. In particular, in the electrode assembly 100 according to the first embodiment, an upper surface or a lower surface thereof does not exchange heat with the heat exchange unit 300, but rather, a plurality of protrusions 111 formed on one side of the electrode assembly 100 directly exchange heat with the heat exchange unit 300, and thus even when the thickness of the electrode assembly 100 increases, the overall temperature of the electrode assembly 100 may be effectively controlled.

The electrode assembly 100 is an assembly composed of a plurality of electrodes 110 and separators 120 interposed between the electrodes 110, and may have various structures. For example, as shown in FIG. 2, the electrode assembly 100 may have a stack-type structure in which a plurality of electrodes 110 and separators 120 are alternately stacked.

Additionally, although not shown in FIG. 2, the electrode assembly 100 may have a stack-folding structure in which electrodes 110 and separators 120 are stacked and folded, or a jelly-roll structure in which a stack where electrodes 110 and separators 120 are stacked is wound.

Meanwhile, the electrode 110 included in the electrode assembly 100 is a negative electrode 110a or a positive electrode 110b, and the electrode assembly 100 may be accommodated inside the exterior material 200 in a state of being impregnated with an electrolyte.

The negative electrode 110a emits electrons to a connected wire, and may have a structure in which an active material or the like is applied to a negative electrode substrate composed of a thin metal plate. At this time, a coating layer may be formed on at least a portion of the negative electrode 110a.

The positive electrode 110b has a structure in which a mixture of an active material, a conductive material, a binder, and the like is applied to a thin plate made of a metal such as aluminum, and a coating layer may be formed on at least a portion of the positive electrode 110b.

The separator 120 is a thin film of an insulating material interposed between the electrodes 110, and electrodes 110 of different polarities may be positioned on one surface and the other surface of the separator 120, respectively. That is, the separator 120 may block direct contact of the negative electrode 110a and the positive electrode 110b.

Additionally, a plurality of pores having a diameter of 1 µm or less through which positive ions such as lithium pass are formed in the separator 120, and the separator 120 may be made of various materials. For example, a synthetic resin such as polyethylene (PE) or polypropylene (PP) may be used for the separator 120.

The protrusion 111 is an electrode uncoated portion on which a coating layer is not formed, and may be a protrusion protruding to one side from a plate-shaped electrode 110. At this time, the plate-shaped electrode 110 may include an electrode tab 112 protruding in a different direction from the protrusion 111. That is, each of the plurality of electrodes 110 included in the electrode assembly 100 may include a protrusion 111 protruding to one side and an electrode tab 112 protruding to the other side. Additionally, the protrusions 111 formed on one side of the electrode assembly 100 may be disposed to be spaced apart from each other.

Specifically, each of the plurality of negative electrodes 110a included in the electrode assembly 100 may include a negative electrode protrusion 111a protruding to one side and a negative electrode tab 112a protruding to the other side. That is, the negative electrode 110a may include one side surface from which the negative electrode protrusion 111a protrudes and the other side surface from which the negative electrode tab 112a protrudes.

Additionally, each of the plurality of positive electrodes 110b included in the electrode assembly 100 may include a positive electrode protrusion 111b protruding to one side and a positive electrode tab 112b protruding to the other side. That is, the positive electrode 110b may include one side surface from which the positive electrode protrusion 111b protrudes and the other side surface from which the positive electrode tab 112b protrudes.

Here, the negative electrode protrusion 111a and the positive electrode protrusion 111b may protrude from a first side surface of the electrode assembly 100, and the negative electrode tab 112a and the positive electrode tab 112b may protrude from a second side surface of the electrode assembly 100. On the first side surface of the electrode assembly 100, the negative electrode protrusions 111a and the positive electrode protrusions 111b may be arranged alternately and disposed to be spaced apart from each other. As shown in FIG. 2, the negative electrode protrusion 111a and the positive electrode protrusion 111b that are each included in the negative electrode 110a and the positive electrode 110b stacked in the electrode assembly 100 may be arranged alternately from one side in the longitudinal direction of the electrode assembly 100 to the other side.

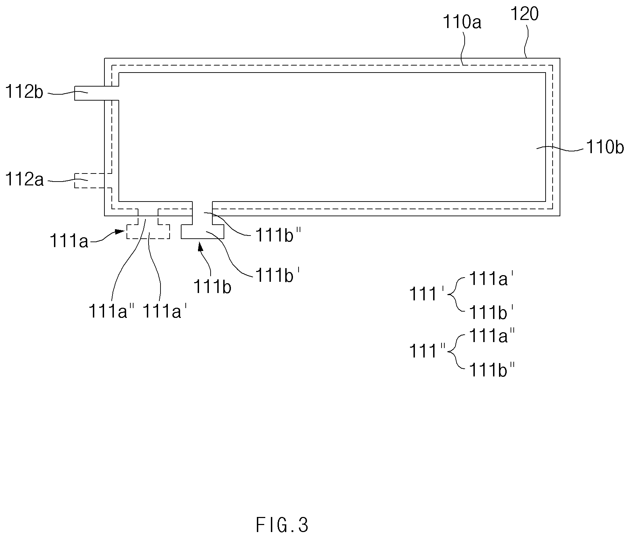

FIG. 3 is a front view showing a specific shape of a protrusion in the electrode assembly of FIG. 2 of the present disclosure.

Referring to FIG. 3, the protrusion 111 may include a first part 111' extending along the longitudinal direction of the electrode 110; and a second part 111" connecting the electrode 110 and the first part 111'. Here, the width of the second part 111" may be formed narrower than the width of the first part 111'.

Specifically, as shown in FIG. 3, the negative electrode protrusion 111a may be composed of a relatively wide part 111a' extending along the longitudinal direction of the negative electrode 110a and a relatively narrow part 111a" connecting the wide part 111a' and the negative electrode 110a therebetween. Additionally, the positive electrode protrusion 111b may be composed of a relatively wide part 111b' extending along the longitudinal direction of the positive electrode 110b and a relatively narrow part 111b" connecting the wide part 111b' and the positive electrode 110b therebetween.

Specifically, the first parts 111a', 111b' of each of the negative electrode protrusion 111a and the positive electrode protrusion 111b may have a relatively wider width compared to the second parts 111a", 111b". In this case, the first parts 111a', 111b' have a large area, and thus the clamping member may be easily clamped. At this time, a heat exchange unit composed of a heating portion and/or a cooling portion may be provided inside the clamping member, so that the protrusions 111a, 111b may effectively exchange heat with the heat exchange unit.

That is, as the width of the first parts 111a', 111b' constituting each of the negative electrode protrusion 111a and the positive electrode protrusion 111b is formed relatively wider than that of the second parts 111a", 111b", the electrode assembly 100 may be more easily coupled to the clamping member having the heat exchange unit, and the heat exchange rate between the electrode assembly 100 and the heat exchange unit may be improved.

In particular, since only the first parts 111a', 111b' of the negative electrode protrusion 111a and the positive electrode protrusion 111b clamped to the clamping member are formed to have a wide width, the weight of the protrusions 111a, 111b may be reduced compared to the case where the entire width of the negative electrode protrusion 111a and the positive electrode protrusion 111b is formed wide, and thus the energy density of the electrode assembly 100 may be reconsidered.

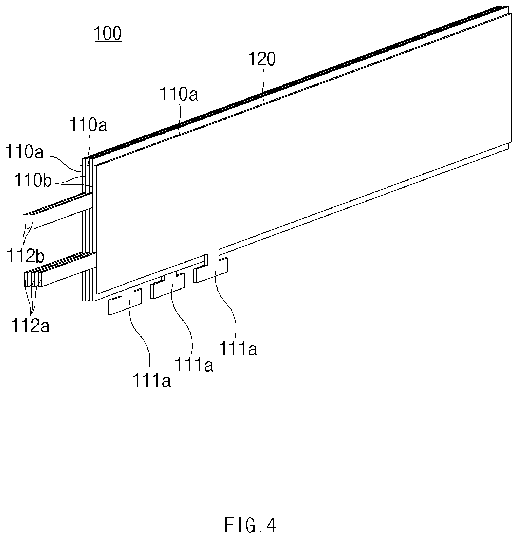

Meanwhile, FIG. 4 is a perspective view showing a second embodiment of an electrode assembly according to the present disclosure.

The electrode assembly 100 shown in FIG. 4 includes three negative electrodes 110a and two positive electrodes 110b, but this is exemplary, and the number of negative electrodes 110a and positive electrodes 110b included in the electrode assembly 100 according to the second embodiment of the present disclosure is not limited thereto.

Referring to FIG. 4, in the electrode assembly 100 according to the second embodiment of the present disclosure, the protrusion 111a may be formed on each of the plurality of negative electrodes 110a constituting the electrode assembly 100. Specifically, in the electrode assembly 100 according to the second embodiment of the present disclosure, the plurality of protrusions 111a may be formed only on the negative electrodes 110a. At this time, one protrusion 111a is formed on one negative electrode 110a, and the plurality of protrusions 111a may all be formed on the same side surface of the electrode assembly 100.

The negative electrode 110a and the positive electrode 110b are plate surfaces having a rectangular plate shape and may have different sizes. For example, the negative electrode 110a may have a relatively larger area than the positive electrode 110b. The protrusion 111a of the electrode assembly 100 according to the second embodiment of the present disclosure is formed only on the negative electrode 110a having a relatively larger area, so that the protrusion 111a may not be covered by the positive electrode 110b plate. In this case, all parts of the protrusion 111a may be coupled to the heat transfer unit 300 to be described later, so that heat exchange between the protrusion 111a and the heat exchange unit 300 may be efficiently performed.

Meanwhile, the plurality of protrusions 111a formed on one side of the electrode assembly 100 may be disposed in various ways. For example, as shown in FIG. 4, the plurality of protrusions 111a may be spaced apart from each other by a certain distance along the longitudinal direction of the negative electrode 110a.

Each of the plurality of negative electrodes 110a included in the electrode assembly 100 according to the second embodiment of the present disclosure may include a negative electrode protrusion 111a protruding to one side and a negative electrode tab 112a protruding to the other side. That is, the negative electrode 110a may include one side surface from which the negative electrode protrusion 111a protrudes and the other side surface from which the negative electrode tab 112a protrudes.

Additionally, each of the plurality of positive electrodes 110b included in the electrode assembly 100 according to the second embodiment of the present disclosure may include a protruding positive electrode tab 112b. Specifically, the negative electrode protrusion 111a may protrude from a first side surface of the electrode assembly 100, and the positive electrode tab 112b and the negative electrode tab 112a may protrude from a second side surface of the electrode assembly 100.

As shown in FIG. 4, the negative electrode protrusion 111a may be composed of a relatively wide first part extending along the longitudinal direction of the negative electrode 110a and a relatively narrow second part connecting the first part and the negative electrode 110a therebetween.

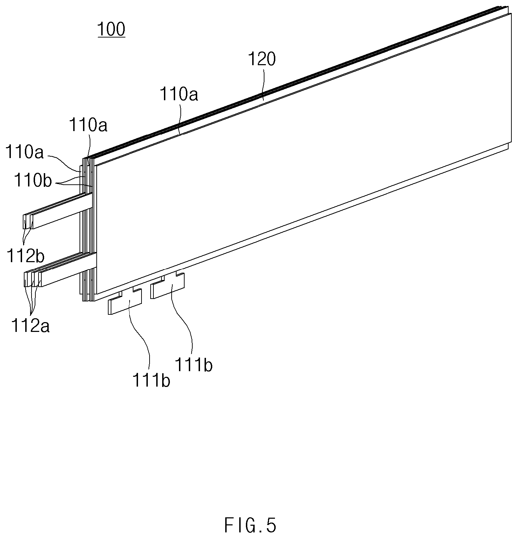

Meanwhile, FIG. 5 is a perspective view showing a third embodiment of an electrode assembly according to the present disclosure.

The electrode assembly 100 shown in FIG. 5 includes three negative electrodes 110a and two positive electrodes 110b, but this is exemplary, and the number of negative electrodes 110a and positive electrodes 110b included in the electrode assembly 100 according to the third embodiment of the present disclosure is not limited thereto.

Referring to FIG. 5, in the electrode assembly 100 according to the third embodiment of the present disclosure, the protrusion 111b may be formed on each of the plurality of positive electrodes 110b constituting the electrode assembly 100. Specifically, in the electrode assembly 100 according to the third embodiment of the present disclosure, the plurality of protrusions 111b may be formed only on the positive electrodes 110b. At this time, one protrusion 111b is formed on one positive electrode 110b, and the plurality of protrusions 111b may all be formed on the same side surface of the electrode assembly 100.

Meanwhile, the plurality of protrusions 111b formed on one side of the electrode assembly 100 may be disposed in various ways. For example, as shown in FIG. 5, the plurality of protrusions 111b may be spaced apart from each other by a certain distance along the longitudinal direction of the positive electrode 110b.

Each of the plurality of positive electrodes 110b included in the electrode assembly 100 according to the third embodiment of the present disclosure may include a positive electrode protrusion 111b protruding to one side and a positive electrode tab 112b protruding to the other side. That is, the positive electrode 110b may include one side surface from which the positive electrode protrusion 111b protrudes and the other side surface from which the positive electrode tab 112b protrudes.

Additionally, each of the plurality of negative electrodes 110a included in the electrode assembly 100 according to the third embodiment of the present disclosure may include a protruding negative electrode tab 112a. Specifically, the positive electrode protrusion 111b may protrude from a first side surface of the electrode assembly 100, and the positive electrode tab 112b and the negative electrode tab 112a may protrude from a second side surface of the electrode assembly 100.

As shown in FIG. 5, the positive electrode protrusion 111b may be composed of a relatively wide first part extending along the longitudinal direction of the positive electrode 110b and a relatively narrow second part connecting the first part and the positive electrode 110b therebetween.

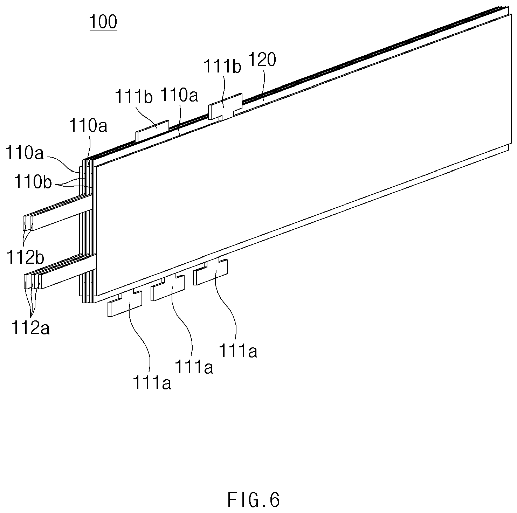

Meanwhile, FIG. 6 is a perspective view showing a fourth embodiment of an electrode assembly according to the present disclosure.

The electrode assembly 100 shown in FIG. 6 includes three negative electrodes 110a and two positive electrodes 110b, but this is exemplary, and the number of negative electrodes 110a and positive electrodes 110b included in the electrode assembly 100 according to the fourth embodiment of the present disclosure is not limited thereto.

Referring to FIG. 6, the electrode assembly 100 according to the fourth embodiment of the present disclosure may include a plurality of positive electrodes 110b, a plurality of negative electrodes 110a, a separator 120 interposed between the plurality of positive electrodes 110b and negative electrodes 110a, a plurality of positive electrode protrusions 111b protruding to one side from the plurality of positive electrodes 110b, and a plurality of negative electrode protrusions 111a protruding to the other side from the plurality of negative electrodes 110a.

Here, the plurality of positive electrode protrusions 111b may be at least partially non-overlapping with each other in the thickness direction of the plurality of positive electrodes 110b, and the plurality of negative electrode protrusions 111a may be at least partially non-overlapping with each other in the thickness direction of the plurality of negative electrodes 110a.

In particular, as shown in FIG. 6, the plurality of positive electrode protrusions 111b may be arranged along the longitudinal direction of the plurality of positive electrodes 110a, and the plurality of negative electrode protrusions 111a may be arranged along the longitudinal direction of the plurality of negative electrodes 10a.

According to the electrode assembly 100 according to the fourth embodiment of the present disclosure, the plurality of negative electrode protrusions 111a and the plurality of positive electrode protrusions 111b are each formed on opposite side surfaces of the electrode assembly 100, so that a separate heat exchange unit 300 may be coupled to the plurality of negative electrode protrusions 111a and the plurality of positive electrode protrusions 111b. In this case, there is an advantageous effect of being able to regulate independently the temperature of the plurality of negative electrodes 110a and the plurality of positive electrodes 110b.

Meanwhile, each of the plurality of negative electrodes 110a included in the electrode assembly 100 according to the fourth embodiment of the present disclosure may include a protruding negative electrode protrusion 111a and a negative electrode tab 112a. The negative electrode protrusion 111a is a negative electrode uncoated portion on which a coating layer is not formed, and may protrude in a different direction from the negative electrode tab 112a.

Each of the plurality of positive electrodes 110b included in the electrode assembly 100 according to the fourth embodiment of the present disclosure may include a protruding positive electrode protrusion 111b and a positive electrode tab 112b. The positive electrode protrusion 111b is a positive electrode uncoated portion on which a coating layer is not formed, and may protrude in a different direction from the positive electrode tab 112b.

Here, the negative electrode protrusion 111a and the positive electrode protrusion 111b may each protrude from opposite side surfaces of the electrode assembly 100, and the negative electrode tab 112a and the positive electrode tab 112b may protrude from the same side surface of the electrode assembly 100. That is, the negative electrode protrusions 111a may protrude from a first side surface of the electrode assembly 100, and the positive electrode protrusions 111b may protrude from a second side surface (a side surface opposite to the first side surface) of the electrode assembly 100. Additionally, both the negative electrode tab 112a and the positive electrode tab 112b may protrude from a third side surface of the electrode assembly 100.

Additionally, the negative electrode protrusion 111a may be composed of a relatively wide first part extending along the longitudinal direction of the negative electrode 110a and a relatively narrow second part connecting the first part and the negative electrode 110a therebetween. Likewise, the positive electrode protrusion 111b may be composed of a relatively wide first part extending along the longitudinal direction of the positive electrode 110b and a relatively narrow second part connecting the first part and the positive electrode 110b therebetween.

### Secondary battery

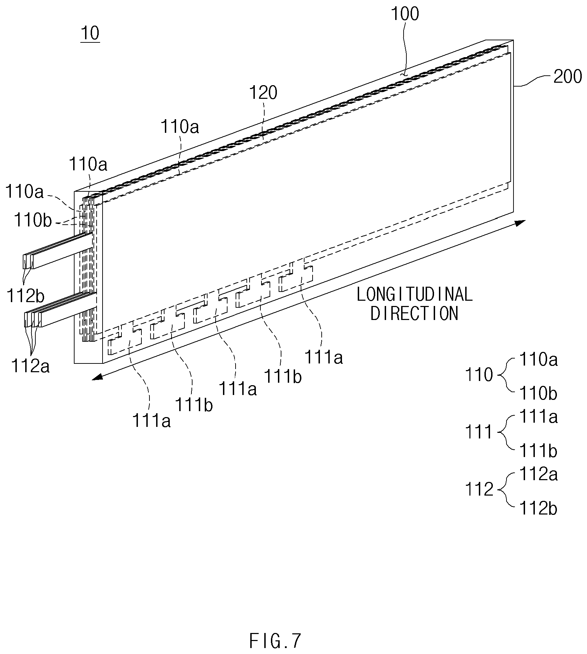

FIG. 7 is a perspective view showing an embodiment of a secondary battery according to the present disclosure.

The electrode assembly 100 of the secondary battery 10 shown in FIG. 7 includes three negative electrodes 110a and two positive electrodes 110b, but this is exemplary, and the electrode assembly 100 of the secondary battery 10 according to the present disclosure may include various numbers of negative electrodes 110a and positive electrodes 110b. The electrode assembly 100 of the secondary battery 10 shown in FIG. 7 has protrusions 111a, 111b formed only on one side thereof, but this is exemplary, and the negative electrode protrusion 111a and the positive electrode protrusion 111b may be formed on one side and the other side of the electrode assembly 100, respectively.

Referring to FIG. 7, the secondary battery 10 according to the present disclosure may include the electrode assembly 100 described above and an exterior material 200 accommodating the electrode assembly 100. The secondary battery 10 is a battery that can be repeatedly charged and discharged unlike a primary battery that cannot be charged and discharged, and may be a battery cell in which the electrode assembly 100 is accommodated inside the exterior material 200. When such secondary batteries 10 are electrically connected, they may form a battery module, and when a plurality of battery modules are connected, they may form a battery pack.

The exterior material 200 is a case that accommodates the electrode assembly 100 and may be made of various materials. For example, the exterior material 200 may be a prismatic case made of a material such as metal or resin. Additionally, the exterior material 200 may be a pouch-type exterior material formed of a laminate sheet composed of an inner resin layer, a metal layer, and an outer resin layer.

When the exterior material 200 is a pouch-type exterior material, the metal layer may serve as a substrate that maintains mechanical strength and a barrier layer that prevents the penetration of moisture and oxygen. The metal layer may be composed of aluminum or an aluminum alloy so as to exhibit the function of improving the strength of the battery case in addition to the function of preventing the inflow or leakage of foreign substances such as gas and moisture. The aluminum alloy may include alloy numbers 8079, 1N30, 8021, 3003, 3004, 3005, 3104, 3105, and the like, which may be used alone or in combination of two or more.

The outer resin layer coated on the outer surface of the metal layer should have excellent resistance to the external environment in order to protect the electrode assembly from the outside, and thus the outer resin layer is required to have excellent tensile strength and durability relative to its thickness. Materials for the outer resin layer may include a polyester-based resin such as polyethylene terephthalate (PET) and polyethylene naphthalate (PEN), a polyolefin-based resin such as polyethylene and polypropylene, and the like.

The inner resin layer coated on the inner surface of the metal layer may be made of a polyolefin-based resin. For example, materials for the inner resin layer may include casted polypropylene (CPP), chlorinated polypropylene, polyethylene, ethylene propylene copolymer, polyethylene and acrylic acid copolymer, polypropylene and acrylic acid copolymer, and the like.

### Battery unit

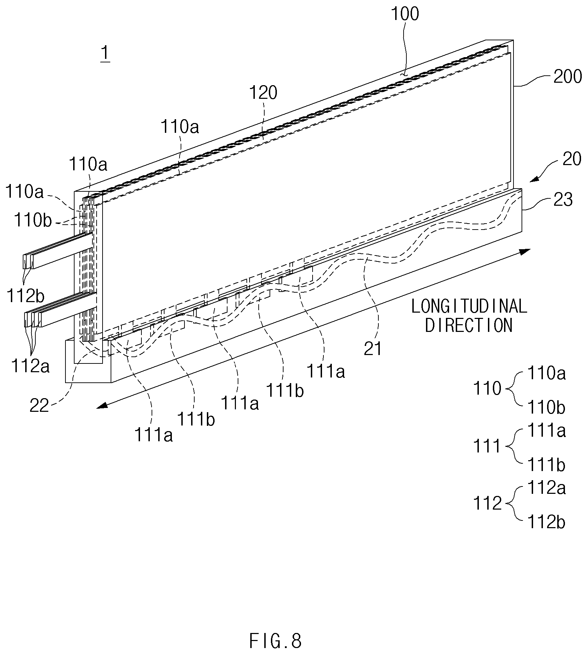

FIG. 8 is a perspective view showing an embodiment of a battery unit 1 according to the present disclosure.

The electrode assembly 100 of the battery unit 1 shown in FIG. 8 includes three negative electrodes 110a and two positive electrodes 110b, but this is exemplary, and the electrode assembly 100 of the battery unit 1 according to the present disclosure may include various numbers of negative electrodes 110a and positive electrodes 110b. Additionally, the electrode assembly 100 of the battery unit 1 shown in FIG. 8 has protrusions 111a, 111b formed only on one side thereof, but this is exemplary, and the negative electrode protrusion 111a and the positive electrode protrusion 111b may be formed on one side and the other side of the electrode assembly 100, respectively.

Referring to FIG. 8, the battery unit 1 according to the present disclosure may include the secondary battery 10 described above and a heat exchange unit 20 coupled to the secondary battery 10. The heat exchange unit 20 may exchange heat with the protrusions 111 of the secondary battery 10.

The heat transfer unit 20 may exchange heat with a plurality of protrusions 111 formed in the electrode assembly 100, and may contact a part of the exterior material 200 that surrounds the protrusions 111. That is, the heat transfer unit 20 may contact the exterior material 200 on one side and/or the other side of the electrode assembly 100 on which the plurality of protrusions 111 are formed.

The heat exchange unit 20 may include at least one of a heating portion 21 for heating the protrusion 111; and a cooling portion 22 for cooling the protrusion 111. FIG. 8 shows that both the heating portion 21 and the cooling portion 22 are included in the heat exchange unit 20, but only one of the heating portion 21 and the cooling portion 22 may be inserted into the heat exchange unit 20 of the secondary battery 10 according to the first embodiment of the present disclosure.

The heat exchange unit 20 may further include a clamping member 23 for clamping a plurality of protrusions 111 accommodated inside the exterior material 200. The clamping member 23 contacts the exterior material 200 and clamps both surfaces of the plurality of protrusions 111, and may be formed in various ways.

For example, the clamping member 23 may be a U-shaped clamp having the heating portion 21 and/or the cooling portion 22 accommodated therein. This clamping member 23 may clamp both surfaces of each of the plurality of protrusions 111 arranged in a row on one side of the electrode assembly 100. That is, the heat exchange unit 20 having the clamping member 23 may be coupled to the side surface of the electrode assembly 100 where the protrusions 111 are formed, rather than the upper/lower surface of the electrode assembly 100.

Conventional secondary batteries are coupled to a heat transfer member (cooling member or heating member) provided near the upper surface or lower surface of the electrode assembly, and this heat transfer member is configured to have a plate structure having a relatively large area. In this case, the heat transfer member has a relatively large volume, and thus there is a problem that the energy density of the entire secondary battery is significantly lowered.

On the other hand, in the secondary battery 10 according to the first embodiment of the present disclosure, the heat exchange unit 20 may have a structure that clamps a plurality of protrusions 111 on one side and/or the other side of the electrode assembly 100. This heat exchange unit 20, unlike the conventional plate structure, has a clamp structure formed in a U-shape on one side and/or the other side of the secondary battery 10, and thus may have a smaller volume than the conventional one. Therefore, according to the secondary battery 10 according to the first embodiment of the present disclosure, the conventional problem that the energy density is significantly lowered may be overcome when the heat transfer member is coupled.

In particular, the clamping member 23 of the heat exchange unit 20 may clamp a part of the protrusions 111a, 111b having a relatively wide width. Specifically, this clamping member 23 may clamp the first part 111a' of the negative electrode protrusion 111a and/or the first part 111b' of the positive electrode protrusion 111b. In this case, the clamping member 23 clamps a part of the protrusion 111a, 111b having a relatively wide width, and thus the heat exchange unit 20 may be firmly coupled to the protrusions 111a, 111b. That is, when the clamping member 23 clamps a part of the protrusions 111a, 111b having a relatively wide width, the electrode assembly 100 may be more easily coupled to the clamping member having the heat exchange unit, and thus the heat exchange rate between the electrode assembly 100 and the heat exchange unit 20 may be improved.

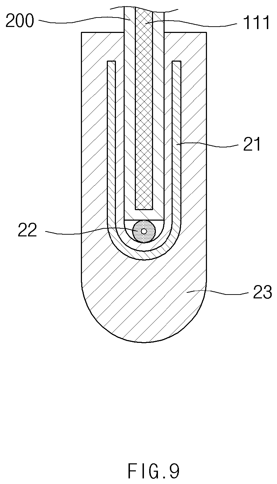

Meanwhile, FIG. 9 is a cross-sectional view of the heat exchange unit shown in FIG. 8.

FIG. 9 shows that the cooling portion 22 is provided inside the clamping member 23. This cooling portion 22 may be provided inside the clamping member 23 in various ways. For example, the cooling portion 22 may be provided at a position adjacent to a plurality of protrusions 111 among the internal positions of the clamping member 23.

Additionally, the cooling portion 22 provided inside the clamping member 23 may be configured in various ways. As described above, the cooling portion 22 is a cooling flow path made of an insulating material, and a cooling fluid may be introduced into the cooling flow path.

Here, the heating portion 21 that releases heat to the plurality of protrusions 111 is a wire that generates heat when an external power source is applied, and may be formed inside the clamping member 23. This heating portion 21 may be formed at various positions inside the clamping member 23. For example, the heating portion 21 may be formed on one side of the U-shaped clamping member 23. At this time, the cooling portion 22 may be formed on the other side of the U-shaped clamping member 23. In this case, the heating portion 21 may be positioned adjacent to one surface of the plurality of protrusions 111, and the cooling portion 22 may be positioned adjacent to the other surface of the plurality of protrusions 111.

In this way, when the heating portion 21 and the cooling portion 22 are each disposed in opposite regions of the U-shaped clamping member 23, the heating portion 21 and the cooling portion 22 may be prevented from exchanging heat with each other, thereby increasing the heating and cooling efficiency of the plurality of protrusions 111.

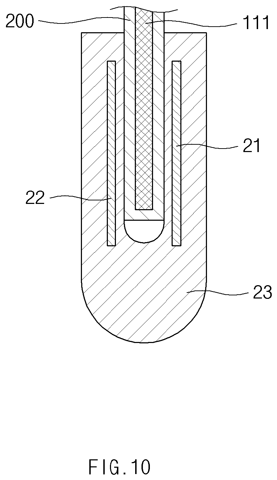

FIG. 10 is a cross-sectional view showing a modified example of the heat exchange unit of FIG. 9.

FIG. 10 shows that the cooling portion 22 for cooling the plurality of protrusions 111 is provided between the exterior material 200 and the clamping member 23. This cooling portion 22 may be provided between the exterior material 200 and the clamping member 23 in various ways. For example, the cooling portion 22 may be sandwiched in an empty space formed between the exterior material 200 and the clamping member 23.

This cooling portion 22 absorbs heat from the plurality of protrusions 111 and may be configured in various ways. For example, the cooling portion 22 may be a cooling flow path made of an insulating material. A cooling fluid may be introduced into this cooling flow path. The cooling fluid may pass through the cooling flow path and sequentially exchange heat with the plurality of protrusions 111 formed on one side of the electrode assembly 100.

At this time, the heating portion 21 that releases heat to the plurality of protrusions 111 may be formed inside the clamping member 23. The heating portion 21 may be configured in various ways. For example, the heating portion 21 may be a wire that generates heat when an external power source is applied. This wire may be positioned adjacent to a part of the exterior material 200 that surrounds the plurality of protrusions 111.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

**[List of Reference Numerals]**

| | | | |
|---|---|---|---|
| 1: | Battery unit | 10: | Secondary battery |
| 20: | Heat exchange unit | 21: | Heating portion |
| 22: | Cooling portion | 23: | Clamping member |
| 100: | Electrode assembly | 110: | Electrode |
| 111: | Protrusion | 112: | Electrode tab |
| 120: | Separator | 200: | Exterior material |

## Claims

1. An electrode assembly comprising:
a plurality of electrodes;
a separator interposed between the plurality of electrodes; and
a plurality of protrusions protruding to one side from the plurality of electrodes,
wherein the plurality of protrusions are at least partially non-overlapping with each other in a thickness direction of the plurality of electrodes,
wherein a protrusion comprises:
a first part extending along a longitudinal direction of the electrode; and
a second part connecting an electrode and the first part, and
the width of the second part is formed narrower than the width of the first part.

2. The electrode assembly according to claim 1,
wherein the plurality of protrusions are arranged along the longitudinal direction of the plurality of electrodes.

3. The electrode assembly according to claim 1,
wherein the protrusion comprises an electrode uncoated portion protruding from one side of the electrode in a plate shape.

4. The electrode assembly according to claim 3,
wherein the electrode comprises an electrode tab protruding in a different direction from the protrusion.

5. The electrode assembly according to claim 1,
wherein the protrusions comprises a negative electrode protrusion formed on each of the plurality of negative electrodes.

6. The electrode assembly according to claim 5,
wherein the protrusions further comprises a positive electrode protrusion formed on each of the plurality of positive electrodes, and
the negative electrode protrusion and the positive electrode protrusion are disposed alternately in the longitudinal direction of the plurality of electrodes.

7. The electrode assembly according to claim 6,
wherein the negative electrode protrusion is spaced apart from the positive electrode protrusion in the longitudinal direction of the plurality of electrodes.

8. An electrode assembly comprising:
a plurality of positive electrodes;
a plurality of negative electrodes;
a separator interposed between the plurality of positive electrodes and negative electrodes;
a plurality of positive electrode protrusions protruding from one side from the plurality of positive electrodes; and
a plurality of negative electrode protrusions protruding from the other side from the plurality of negative electrodes,
wherein the plurality of positive electrode protrusions are at least partially non-overlapping with each other in a thickness direction of the plurality of positive electrodes, and
the plurality of negative electrode protrusions are at least partially non-overlapping with each other in a thickness direction of the plurality of negative electrodes,
wherein protrusion comprises:
a first part extending along a longitudinal direction of the electrodes; and
a second part connecting electrode and the first part, and
a width of the second part is formed narrower than a width of the first part.

9. The electrode assembly according to claim 8,
wherein the plurality of positive electrode protrusions are arranged along the longitudinal direction of the plurality of positive electrodes, and
the plurality of negative electrode protrusions are arranged along the longitudinal direction of the plurality of negative electrodes.

10. A secondary battery comprising the electrode assembly according to claim 1; and an exterior material accommodating the electrode assembly.

11. A battery unit comprising a secondary battery according to claim 9; and a heat exchange unit that exchanges heat with the protrusions.

12. The battery unit according to claim 11,
wherein the heat exchange unit comprises at least one of:
a heating portion for heating the protrusions; and
a cooling portion for cooling the protrusions.

13. The battery unit according to claim 12,
wherein the heat exchange unit further comprises a clamping member for clamping the plurality of protrusions accommodated inside the exterior material.

14. The battery unit according to claim 13,
wherein the heating portion comprises a wire provided inside the clamping member.

15. The battery unit according to claim 13,
wherein the cooling portion comprises a cooling flow path made of an insulating material.

16. The battery unit according to claim 15,
wherein the cooling flow path is provided between the exterior material and the clamping member or inside the clamping member.
